# EUROPÄISCHE PATENTANMELDUNG

(11) **EP 0 528 326 A1**
(43) Veröffentlichungstag der Anmeldung: **24.02.1993**
(21) Anmeldenummer: 92113654.5
(22) Anmeldetag: 11.08.1992
(51) Int. Cl.: H05B 37/00, H05B 43/00, F21Q 3/00, H02N 6/00

(54) **Solarbetriebene Warnleuchte**

(30) Priorität: 16.08.1991 DE 4127015
(71) Anmelder: Horizont Gerätewerk GmbH, D-34497 Korbach (DE)
(72) Erfinder: Weinreich, Wilhelm, W-3540 Korbach (DE); Kleine, Gerhard, W-3540 Korbach-Leibach (DE)
(74) Vertreter: Fuchs, Luderschmidt & Partner Patentanwälte

(57) **Zusammenfassung**

Eine Warnleuchte zur optischen Absicherung von Gefahrenstellen wird mit solarbetriebener Erststromquelle und einer von den Solarzellen unabhängigen Zweitstromquelle wahlweise betreibbar gemacht. Dabei sollen bevorzugt selbsttätige elektronische Anpassungsanordnungen für die Klemmenspannung bzw. optimale Energiezuspeisung aus den beiden Stromquellen für den Betrieb der Lampe vorgesehen sein. Zusätzlich können in der Warnleuchte geeignete Maßnahmen für optimale Lichtausbeute und Lichtbündelung vorgesehen sein. Es sind ferner Sicherungsmaßnahmen vorzusehen, um das Lösen von mehr als 100 g schweren Teilen vom Leuchtengehäuse bei hartem Aufprall eines Fahrzeugs zu vermeiden.

## Beschreibung

Die Erfindung betrifft eine Warnleuchte zur optischen Absicherung von Gefahrenstellen, beispielsweise Baustellen an Straßen und dgl., die einen Optikteil und einen Stromversorgungsteil aufweist, wobei der Optikteil die Lichtquelle, vorzugsweise eine Lampe und eine elektronische Schalteinrichtung zum selbsttätigen Ein- und Ausschalten der Lichtquelle, z.B. einen Dämmerungsschalter enthält, und der Stromversorgungsteil eine Stromquelle aufweist, die aufgenommenes Licht in elektrische Energie umsetzende Solarzellen und eine von diesen aufgeladene, als elektrischer Energiespeicher wirkende Sekundärelemente-Batterie (nachfolgend als "Akku") bezeichnet enthält.

Die in der Praxis eingesetzten, mit Solarzellen betriebenen Warnleuchten haben eine Anzahl von Nachteilen und Mängeln, die den Einsatz solcher Warnleuchten bisher erheblich eingeschränkt haben. So können die auf dem Leuchtengehäuse angebrachten Solarzellen-Panele nur begrenzte Größe aufweisen, um die Standsicherheit des mit der Warnleuchte besetzten Absperrungsteiles durch Windeinfluß nicht zu gefährden. Außerdem sehen die geltenden Vorschriften vor, daß bei hartem Anstoßen eines Fahrzeuges an einem Absperrungsteil sich vom Absperrungsteil und der darauf angebrachten Warnleuchte lösende Teile nur toleriert werden können, wenn ihr Gewicht geringer als 100 g ist. Auch hierdurch sind Größe und Gewicht der auf dem Leuchtengehäuse angebrachten Solarzellen-Panele begrenzt. Damit ist auch die elektrische Leistung der aus Solarzellen und Akku gebildeten Stromquelle begrenzt, so daß insbesondere in der dunklen Jahreszeit die tagsüber gewonnene elektrische Energie nicht für den Betrieb der Warnleuchte bei Nacht ausreicht. Ein Versuch, diesem Mangel abzuhelfen, ist aus der älteren Deutschen Patentanmeldung P 4 009 389.1 dahingehend bekannt, daß die Warnleuchte automatisch von Dauerlicht auf Blinklicht umgeschaltet wird, wenn der Akku einen vorgegebenen Entladezustand erreicht hat. Bei Blinkbetrieb kann die Restladung des Akkus über längere kritische Perioden gestreckt werden und trotzdem die wesentliche sicherheitsrelevante Funktion der Lichtabstrahlung erhalten bleiben. Dieser ältere Vorschlag kann zur Überbrückung des Solarzellenbetriebes von Warnleuchten bei Schlechtwetterperioden herangezogen werden. Für den Betrieb der Warnleuchte in der dunklen Jahreszeit ist aber dieser Vorschlag nicht ausreichend.

Demgegenüber liegt der Erfindung die Aufgabe zugrunde, solarbetriebene Warnleuchten dahingehend zu verbessern, daß eine einfach, leicht und schnell ausführbare Umrüstung für Betrieb in dunkler Jahreszeit mit nur geringem Aufwand möglich und außerdem der Solarbetrieb der Warnleuchte am Übergang zur dunklen Jahreszeit und auch bei Schlechtwetterperioden sicherer und stabiler wird.

Diese Aufgabe wird erfindungsgemäß dadurch gelöst, daß die Lampe wahlweise anstelle oder zusätzlich zu der durch die Solarzellen und die Sekundärelemente-Batterie gebildeten Erststromquelle an eine von den Solarzellen unabhängige Zweitstromquelle anschließbar ist.

Durch die Erfindung kann ohne schwierige und aufwendige Umrüstung der Betrieb der Warnleuchten in der dunklen Jahreszeit einfach dadurch weitergeführt werden, daß die Solarzellen abgeschaltet und der an die Solarzellen angeschlossene Akku durch eine Zweitstromquelle ersetzt wird. Allerdings ist dabei zu beachten, daß normalerweise die einzusetzende Zweitstromquelle eine entsprechend größere Kapazität als der eingesetzte Akku aufweisen müßte, weil sie nicht nachgeladen wird. Die Zweitstromquelle hat dann auch eine von dem Akku unterschiedliche Entladespannungs-Charakteristik. Sofern die beiden Stromquellen aber keine allzugroßen Unterschiede aufweisen und der Betrieb der Lampe unkritisch ist, kann in vielen praktischen Anwendungsfällen die durch den Wechsel der Stromquelle bedingte Verschlechterung der Anpassung der Lampe an die Kennlinie der Stromquelle im Kauf genommen werden.

Da aber die von der Lampe abgestrahlte Lichtmenge bei solarbetriebenen Warnleuchten in vielen Fällen kritisch ist, also an der unteren Grenze der Einsatzfähigkeit von Solarzellen für Warnleuchten liegt, würde eine Verschlechterung der Anpassung von Lampe und Stromquelle die Einsatzfähigkeit der Warnleuchte gefährden.

In bevorzugter Ausführungsform der Erfidnung wird daher vorgeschlagen, daß eine die Lampe hinsichtlich ihrer optimalen Lichtausbeute an die eine und andere der Stromquellen bzw. deren augenblickliche Klemmspannung anpassende zusätzliche elektrische Anordnung vorgesehen ist. Durch diese bevorzugte Ausführungsform wird erreicht, daß zur Umrüstung der Warnleuchte für Betrieb ohne Solarzellen in der dunklen Jahreszeit lediglich die Zweitstromquelle anstatt des an die Solarzellen angeschlossenen Akkus einzusetzen ist, ohne Auftreten einer Anpassungs-Verschlechterung der Lampe. Das Abschalten der Solarzellen kann einfach durch den Einsatz einer Sperrdiode beim Einsetzen der Zweitstromquelle automatisch erfolgen. Da die zusätzliche elektrische Anordnung zur Anpassung der einen und anderen Stromquelle bzw. deren Klemmenspannung von derselben Lampe und dementsprechend von einer optimalen Betriebsspannung für die Lampe ausgeht, besteht eine Bezugsspannung, anhand deren auch der jeweilige Betriebszustand der eingesetzten Stromquelle mit der optimalen Betriebsspannung der Lampe abgleichbar ist. Die zusätzliche elektrische Anordnung arbeitet somit äquivalent zu einer Anordnung zur Stabilisierung der Klemmenspannung auf die Bezugsspannung und fängt dadurch auch jegliche durch den Ladezustand des Akkus hervorgerufene Schwankungen der Klemmenspannung der Erststromquelle bis auf die Bezugsspannung hin auf. Dies bedeutet, daß auch bei kritischen Arbeitsbedingungen der Solarzellen praktisch konstanter Betrieb an der Lampe sichergestellt wird. Durch diese Betriebsabsicherung wird die Möglichkeit geschaffen, die Solarzellen-Panele möglichst klein und leicht auszulegen, so daß - wenn der Optikteil ein auf einem Absperrungsteil, beispielsweise einer Bake, anzubringendes Leuchtengehäuse bildet - keine nennenswerte Gefahr besteht, daß der das Leuchtengehäuse mit den Solarzellen-Panelen tragende Absperrungsteil zusätzlich windempfindlich wird. Das Gewicht der Solarzellen-Panele ist ausreichend gering, so daß sich keine schweren Bruchstücke beim Umstoßen des das Leuchtengehäuse tragenden Absperrungsteiles vom Leuchtengehäuse lösen können. Nicht zuletzt bleibt auch der Preis der relativ kleingehaltenen Solarzellen-Panele angemessen gering.

Die zusätzliche elektrische Anordnung kann beispielsweise einen die Klemmenspannung der jeweils angeschlossenen Stromquelle auf eine Bezugsspannung angleichenden und auf die Betriebsspannung der Lampe umsetzenden Wandler aufweisen. Bei Einsatz eines Wandlers, beispielsweise eines DC-DC-Wandlers, kann die Betriebsspannung der Lampe grundsätzlich verschieden von der Klemmenspannung der jeweils angeschlossenen Stromquelle sein. So können beispielsweise Stromquellen mit 5 V Klemmenspannung und 6 V Klemmenspannung vorgesehen sein, während die Betriebsspannung der Lampe bei 24 V oder noch höher liegen kann. Der Einsatz eines Wandlers ist zwar etwas aufwendig, jedoch läßt sich mit einem solchen Wandler die Anpassung der Lampe an die jeweils eingesetzte Stromquelle und den augenblicklichen Zustand dieser Stromquelle optimal erreichen. Außerdem bietet sich die Möglichkeit, Lampen einzusetzen, die höhere Betriebsspannung als Glühlampen erfordern, wie beispielsweise Gasentladungslampen.

In einfacherer Ausführungsform der Erfindung, bei der die beiden Stromquellen unterschiedliche EMK und/oder unterschiedliche Klemmenspannung unter Belastung mit der Lampe aufweisen, ist vorgesehen, daß die Lampe an diejenige Stromquelle angepaßt ist, die die niedrigere Klemmenspannung liefert, und daß die zusätzliche elektrische Anordnung dazu ausgebildet ist, die höhere Klemmenspannung der anderen Stromquelle auf den als Bezugsspannung dienenden Klemmenspannungswert der der Lampe angepaßten Stromquelle äquivalent anzupassen. Dabei ist es grundsätzlich möglich, die Erststromquelle mit niedrigerer Klemmenspannung vorzusehen. Vorteilhafter erscheint es jedoch, eine Zweitstromquelle einzusetzen, die die niedrigere Klemmenspannung liefert, diese niedrigere Klemmenspannung als die Bezugsspannung für die Anpassung an die Betriebsspannung der Lampe zu wählen und die zusätzliche elektrische Anordnung zum äquivalenten Anpassen an die Bezugsspannung mit der Erststromquelle zusammenzuschalten. Diese letztere Ausführungsform eignet sich insbesondere für die Fälle, in welchen eine Glühlampe als Lichtquelle eingesetzt ist. Es bietet sich hierbei der besondere Vorteil, daß der gerätetechnische und schaltungstechnische Aufwand kleingehalten werden kann.

Die Zweitstromquelle kann im Rahmen der Erfindung eine Primärelemente-Batterie (nachfolgend als "Batterie" bezeichnet)sein, beispielsweise eine mit Luftsauerstoff arbeitende Trockenbatterie. Es empfiehlt sich hierzu im Rahmen der Erfindung die Verwendung einer kältefesten alkalischen Batterie. Der Akku der Erststromquelle ist vorzugsweise ein Bleigel-Akkumulator oder ein Nickel-Cadmium-Akkumulator.

Die zusätzliche elektrische Anordnung zur Anpassung der Erststromquelle bzw. deren Klemmenspannung an die Glühlampe kann im Rahmen der Erfindung eine auf gegenüber der Klemmenspannung der Zweitstromquelle erhöhte elektrische Spannung ansprechende elektronische, getaktete Stromunterbrecherschaltung sein. Dabei kann diese elektronische, getaktete Stromunterbrecherschaltung für eine selbsttätige Steuerung der off-Zeit in Abhängigkeit von der spannungsdifferenz zwischen der auf die Klemmenspannung der Zweitstromquelle eingestellten Bezugsspannung und der angelegten höheren Ist-Spannung ausgebildet sein. Ferner ist es zweckmäßig, die elektronische, getaktete Stromunterbrecherschaltung für eine Taktfrequenz auszulegen, die um ein vielfaches höher als die mögliche Tastfrequenz bei Blinklichtbetrieb der Glühlampe ist. Die höhere Taktfrequenz der Stromunterbrecherschaltung stellt sicher, daß keine merkliche Störung im Blinklichtbetrieb auftritt. Ferner wird auch bei Blinklichtbetrieb der Glühlampe ebenso wie bei Dauerlichtbetrieb während der off-Zeit der Stromunterbrecherschaltung der Glühfaden der Glühlampe etwas abgekühlt und bei der on-Zeit wieder aufgeheizt. Es stellt sich dadurch eine mittlere Glühfaden-Temperatur ein, die vom Verhältnis von on-Zeit zu off-Zeit abhängt. Durch die hohe Taktfrequenz der Stromunterbrecherschaltung fällt die durch die Schwankung der Glühfaden-Temperatur auftretende Schwankung im Lichtstrom praktisch nicht ins Gewicht.

Im Rahmen der Erfindung kann die Warnleuchte je nach Jahreszeit mit der einen oder anderen Batterie ausgestattet sein, also normalerweise in Solarbetrieb arbeiten und in der dunklen Jahreszeit mit der Zweitstromquelle ausgestattet sein. Es ist aber auch möglich, die Erststromquelle und die Zweitstromquelle gleichzeitig vorzusehen und über einen Umschalter und die die Anpassung der beiden Stromquellen vornehmende, zusätzliche elektrische Anordnung an die Glühlampe anzuschließen. Sicherlich ist eine Primärelemente-Batterie nach Ingebrauchnahme in etwas stärkerem Maße der Selbstentladung unterworfen als bei luftdichter und feuchtigkeitsdichter Verpackung und Lagerung. Die gleichzeitige Ausstattung der Warnleuchte mit Erststromquelle und Zweitstromquelle bietet aber den Vorteil, daß für die Umrüstung praktisch keine Arbeiten mehr nötig sind, bis auf eine manuelle Umschaltung, wenn der Umschalter von Erststromquelle auf Zweitstromquelle und umgekehrt nicht automatisch betätigt wird. Als weiterer wesentlicher Vorteil wird durch die gleichzeitige Ausstattung der Warnleuchte mit Erststromquelle und Zweitstromquelle erreicht, daß auch in kurzen Perioden mit kritischen Lichtverhältnissen (Regenperioden) eine zeitweilige Umstellung von Solarbetrieb auf Batteriebetrieb möglich ist. Der Umschalter von Erststromquelle auf Zweitstromquelle und umgekehrt kann als automatisch betätigter elektronischer Umschalter derart ausgebildet sein, daß er auf die Zweitstromquelle schaltet, sobald die Klemmenspannung an der Erststromquelle unter diejenige der Zweitstromquelle oder eine entsprechend der Klemmenspannung der Zweitstromquelle eingestellte Bezugsspannung absinkt, und daß er auf die Erststromquelle schaltet, wenn deren Klemmenspannung um ein vorher festgelegtes Maß über der Klemmenspannung der Zweitstromquelle bzw. über Bezugsspannung liegt. Dies läßt sich durch Einsatz von Sperrdioden zwischen den beiden Stromquellen und dem Verbraucher-Stromkreis einfach realisieren.

Im Rahmen der Erfindung empfiehlt sich eine Kontrolleinrichtung, die einfach und schnell erkennen läßt, ob der Betrieb der Warnleuchte in eine kritische Phase gekommen ist. Dies kann sowohl für den Solarbetrieb als auch für den Batteriebetrieb vorgesehen sein. Diese Kontrolleinrichtung macht es möglich, daß eine Kontrollperson am Abend an einer Baustelle vorbeifährt und dabei feststellt und notiert, ob und welche Warnleuchten in kritischer Betriebsphase gekommen sind. Solche Kontrolleinrichtungen können beispielsweise in Form einer an einen Kontrollschalter angeschlossenen Kontrollampe vorgesehen sein, wobei der Kontrollschalter anspricht, wenn die Klemmenspannung an dem Akku der Erststromquelle oder/und an der Zweitstromquelle unter einen vorher festgelegten Spannungswert absinkt, und dabei die Kontrollampe einschaltet. Eine andere besonders vorteilhafte Möglichkeit für die Betriebsüberwachung der erfindungsgemäßen Warnleuchte kann ausgehend vom Vorschlag der älteren Patentanmeldung P 4 009 389.1 vorsehen, daß die Betriebseinrichtungen für die Glühlampe für Dauerlicht und für Blinklicht ausgebildet sind und daß ein auf die Klemmenspannung des Akkus oder der Zweitstromquelle ansprechender, automatischer Betriebsumschalter vorgesehen ist, wobei der Betriebsumschalter im Normalbetrieb auf Dauerlicht eingestellt ist und bei absinkender Klemmenspannung der jeweils überwachten Stromquelle auf Blinklicht umschaltet. Bei abendlicher Kontrolle der Baustelle bzw. der an ihr aufgestellten Warnleuchten ist es sofort erkennbar, welche Warnleuchten auf Blinklichtbetrieb umgeschaltet ist. Dabei kommt auch noch die aus der älteren Patentanmeldung bekannte Betriebsstreckung bei Blinklicht vorteilhaft zur Geltung, so daß die umgeschalteten Warnleuchten nach der Kontrolle noch eine gewisse Zeit in Blinkbetrieb laufen können, bis entsprechende Maßnahmen eingeleitet werden. Der Betriebumschalter kann dabei zur Überwachung allein des Akkus der Erststromquelle eingesetzt sein, es ist aber auch möglich, den Betriebsumschalter zur gleichzeitigen Überwachung sowohl der Zweitstromquelle als auch der Erststromquelle derart zu schalten, daß er bei Absinken der Klemmenspannung an einer der Batterien auf Blinklicht-Betrieb umschaltet. Es kann dabei der Betriebumschalter derart mit dem Stromquellenumschalter verbunden sein, daß die Klemmenspannung der jeweils eingeschalteten Stromquelle vom Betriebsumschalter überwacht wird.

Ausführungsbeispiele der Erfindung werden im folgenden anhand der Zeichnung näher erläutert, wobei gleiche Teile mit denselben Bezugszeichen versehen sind.

Es zeigen:
- Figur 1: in perspektivischer Ansicht eine auf einer Bake angebrachte erfindungsgemäße Warnleuchte in einer ersten Ausführungsform;
- Figur 2: in perspektivischer Ansicht eine zweite Ausführungsform der Warnleuchte;
- Figur 3: eine Ausführungsform der erfindungsgemäß vorzusehenden zusätzlichen elektrischen Anpassungs-Anordnung in schematischem Schaltbild;
- Figur 4: schematisch den Spannungsverlauf am Ausgang einer getakteten elektronischen Schalteranordnung;
- Figur 5: eine zweite Ausführungsform der elektrischen Schaltungsanordnung der Warnleuchte nach Figuren 1 und 2;
- Figur 6: eine Schaltungsanordnung für eine Warnleuchte nach Figuren 1 und 2 in schematischer Darstellung.
- Figur 7: eine vereinfachte Schaltungsanordnung für eine Warnleuchte nach Figuren 1 und 2 und
- Figur 8: eine weitere Schaltungsanordnung für eine Warnleuchte gemäß der Erfindung.

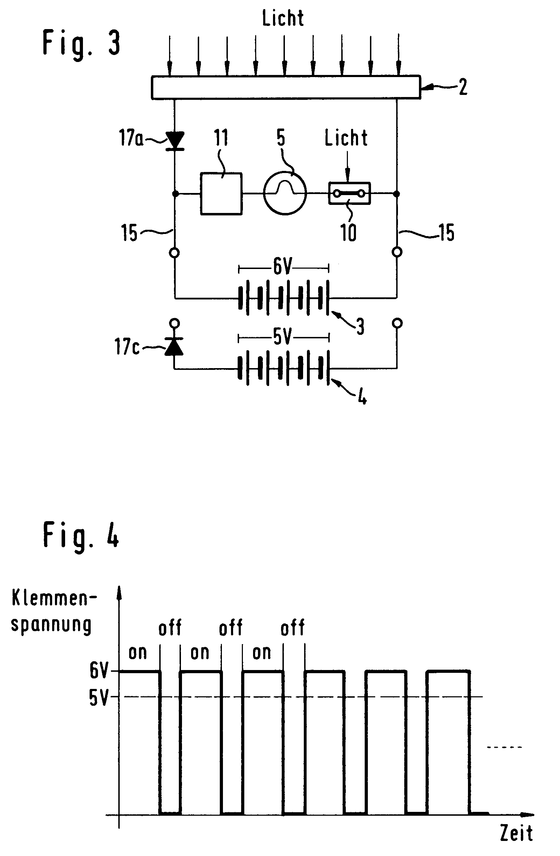

In den dargestellten Beispielen weist die Warnleuchte einen Optikteil 1 und einen Stromversorgungsteil auf, der zwei Solarzellen-Paneele 2 und zwei elektrische Batterien, nämlich einen als Energiespeicher mit den Solarzellen 2 zusammenwirkenden Akku 3 und eine Batterie 4 (s. Fig. 3) enthält, wobei die Solarzellen 2 zusammen mit dem Akku 3 die Erststromquelle bilden und die Batterie 4 die Zweitstromquelle darstellt.

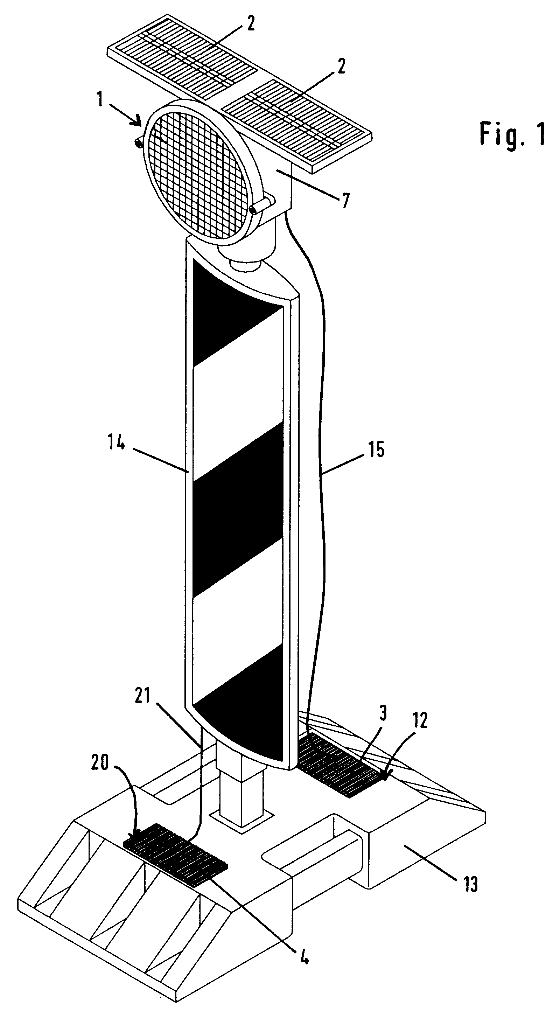

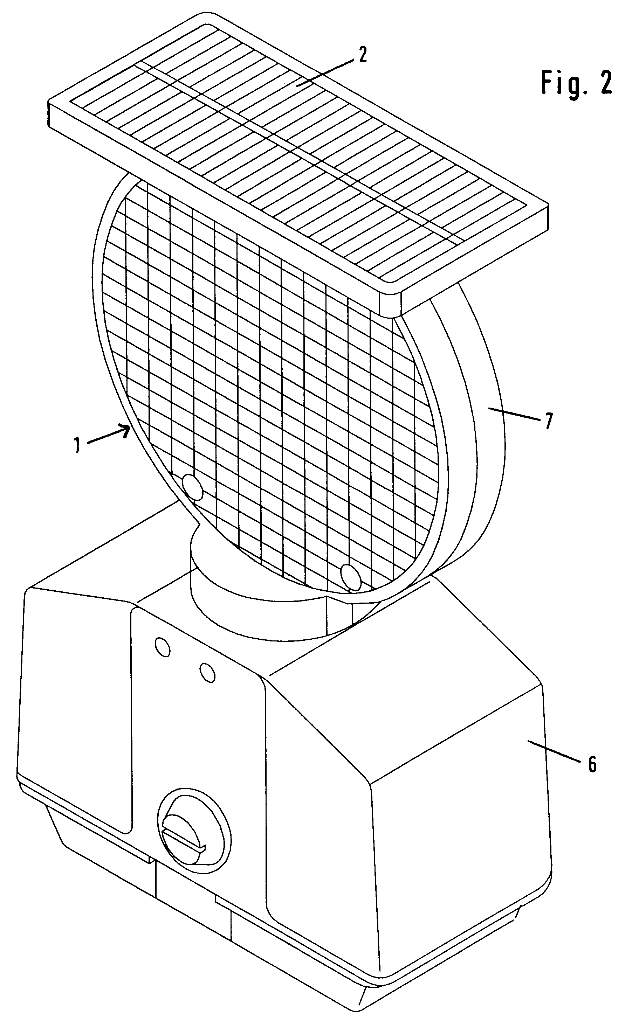

Der Optikteil 1 enthält in den dargestellten Beispielen eine Lampe 5. Auf einem Lampenträger sind die elektrischen bzw. elektronischen Schaltungsanordnungen für den Betrieb der Glühlampe 5 angebracht, beispielsweise ein Dämmerungsschalter 10 und die im folgenden erläuterte zusätzliche elektrische Anordnung 11, die als elektronische Schaltungsanordnung dazu ausgebildet ist, die Lampe 5 selbsttätig an die jeweils in Betrieb genommene elektrische Stromquelle anzuschließen. Die Solarzellen-Paneele 2 sind - wie aus den Figuren 1 und 2 ersichtlich - auf dem Leuchtengehäuse 7 fest angebracht. Der Akku 3 und die Batterie 4 sind beim Ausführungsbeispiel gemäß Figur 1 in Vertiefungen 12 und 20 im Fuß 13 der Bake 14 untergebracht. Von dort erstrecken sich Verbindungskabel 15 und 21 in das Innere des Leuchtengehäuses 7 bzw. zu den Solarzellen-Panelen 2.

Fig. 2 zeigt zur Veranschaulichung eine zweite Ausführungsform der erfindungsgemäßen Warnleuchte, bei der das Leuchtengehäuse 7 direkt auf einem Gehäuseunterteil 6 sitzt. Ein Solarzellen-Paneel 2 ist fest mit dem Leuchtengehäuse 7 des Optikteils 1 verbunden. In dem Gehäuseunterteil 6 ist ein Akku 3 und eine Batterie 4 untergebracht, wobei der Akku 3 zusammen mit den Solarzellen wiederum die erste Stromquelle, die Batterie 4 hingegen die zweite Stromquelle bilden. Dieses Ausführungsbeispiel zeigt, daß die Erfindung ebenso bei Hand-Warnleuchten Einsatz finden kann.

Im Beispiel der Figur 3 sind die Solarzellen 2 parallel geschaltet mit einem Akku 3, um eine Erststromquelle zu bilden, dessen Klemmenspannung (unter Belastung durch die Lampe 5) bei 6 V liegt. Über die Klemmen dieser Erststromquelle ist die Reihenschaltung eines Dämmerungsschalters 10, der Lampe 5 und einer zusätzlichen elektronischen Anordnung 11 gelegt. In der Verbindungsleitung zwischen den Solarzellen 2 und dem Akku 3 ist eine Sperrdiode 17a als Teil eines automatischen Schalters eingesetzt. Ein weiterer Teil des automatischen Schalters ist die der Batterie 4 vorgeschaltete Sperrdiode 17c. Hierdurch werden die Solarelemente 2 solange eingeschaltet, wie der Akku 3 eingesetzt ist. Ein Einwirken der Solarzellen auf die Batterie 4 wird durch die Sperrdiode 17c verhindert. Andererseits sind die Solarzellen 2 durch die Sperrdiode 17a auch gegenüber der Batterie 4 abgesichert. Wie in Figur 3 angedeutet, ist der Akku 3 vom Verbindungskabel 15 abklemmbar und durch die Batterie 4 ersetzbar, die eine Klemmenspannung von 5 V aufweist. Wenn der Akku 3 durch die Batterie 4 ersetzt wird, erfolgt über den Schalter 17a das Abschalten der Solarzellen 2. Es besteht dann nur noch ein Stromkreis von den Klemmen der als Zweitstromquelle eingesetzten Batterie 4 über die zusätzliche elektrische Anordnung 11, die Lampe 5 und den Dämmerungsschalter 10.

Wie aus Figur 4 ersichtlich, arbeitet die zusätzliche elektrische Anordnung 11 in diesem Fall als getaktete elektronische Schaltung, deren Aufbau ansich bekannt ist. Solche getakteten elektronischen Schaltungen stellen im wesentlichen Taktschalter dar, die in gleichmäßiger Frequenz, beispielsweise 10 kHz, Einschaltzeiten (on-Zeiten) und Ausschaltzeiten (off-Zeiten) bilden. Das Längenverhältnis der off-Zeiten ist gesteuert durch den Spannungsbetrag, um den die angelegte Klemmenspannung oberhalb der festgelegten oder eingestellten Bezugsspannung liegt. Im dargestellten Beispiel liegt die angelegte Klemmenspannung bei z.B. 6 V, während die Bezugsspannung z.B. 5 V beträgt. Im Zusammenwirken mit der als Glühlampe ausgebildeten Lampe 5 wird durch die getaktete elektronische Schaltung der zusätzlichen elektrischen Anordnung 11 erreicht, daß der Glühfaden der Lampe 11 eine mittlere effektive Temperatur annimmt, weil die Glühfadentemperatur während der on-Zeit etwas über diesen Mittelwert ansteigt und während der off-Zeit unter diesen Mittelwert absinkt.

Wird mit der Batterie 4 eine Klemmenspannung von z.B. 5 V angelegt, die der Bezugsspannung entspricht, dann werden die off-Zeiten unmerklich klein oder fallen überhaupt aus. Wird bei angelegtem Akku 3 und starker Lichteinstrahlung an den Solarzellen 2 ein hoher Ladezustand des Akkus erreicht und damit eine hohe Klemmenspannung, dann werden die off-Zeiten relativ groß. Wird durch geringeren Ladezustand des Akkus 3 und Ladungsabfall bei Nacht dessen Klemmenspannung kleiner, dann werden entsprechend die off-Zeiten kürzer. Die als getaktete Schaltung arbeitende zusätzliche elektronische Anordnung 11 ist somit geeignet, auch Schwankungen im Ladezustand des Akku 3 auszugleichen. Dabei ist es von besonderem Vorteil, daß die getaktete Schaltung einen sehr geringen Energieverbrauch hat, also praktisch verlustfrei arbeitet. Es werden somit die durch die schwankenden Lichtverhältnisse bedingten Nachtladeschwankungen und Klemmenspannungsschwankungen an dem Akku 3 weitgehend ausgeglichen und der gleichmäßigen Entladespannungs-Charakteristik der Batterie 4 äquivalent gemacht.

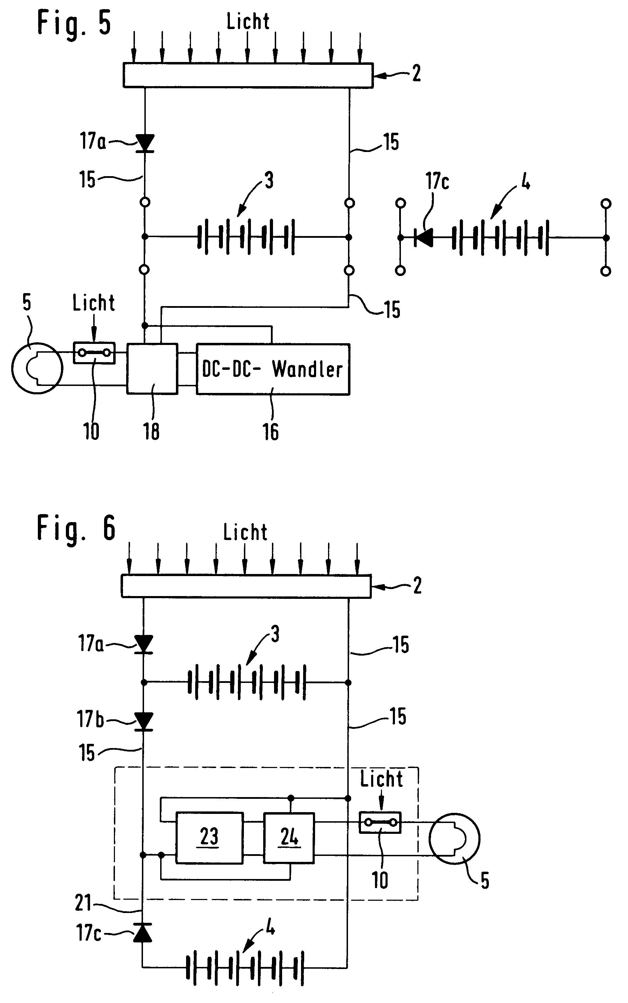

Im Beispiel der Schaltungsanordnung nach Figur 5 ist ein DC-DC-Wandler 16 vorgesehen, der die ihm je nach Einsatz von der Erststromquelle oder von der Zweitstromquelle zugeführte elektrische Energie mit jeweils unterschiedlicher Klemmenspannung in elektrische Betriebsenergie für die Lampe 5 mit der optimalen Betriebsspannungen für die Lampe 5 umsetzt. Da der DC-DC-Wandler 16 geeignet ist, beträchtlich höhere Betriebsspannungen als die Klemmenspannung der einzusetzenden Erststromquelle und Zweitstromquelle zu erzeugen, kann in diesem Beispiel die Lampe 5 auch anderer Art als eine Glühlampe sein, beispielsweise eine Gasentladungslampe. Zwischen dem DC-DC-Wandler 16 und der Lampe 5 ist eine elektronische Schaltungsanordnung als Betriebsumschalter 18 eingesetzt, der auf die angelegte Klemmenspannung der Erststromquelle und der Zweitstromquelle anspricht, um bei Absinken der Klemmenspannung von Dauerbetrieb der Lampe 5 auf Blinkbetrieb umzuschalten. Wie im Beispiel der Figur 3 ist der Lampe 5 ein Dämmerungsschalter 10 vorgeschaltet, um die Lampe 5 bei Tag auszuschalten, bei Dämmerung einzuschalten und über Nacht in eingeschaltetem Zustand zu belassen. Wie Figur 5 zeigt, ist der in der Erststromquelle den Solarzellen parallel geschaltete Akku 3 durch eine Batterie 4 zu ersetzen. Da, wie im Beispiel der Figur 3 die zur Batterie führende Leitung 15 mit Steckerelementen versehen ist, die sowohl für den Akku 3 als auch für die Batterie 4 passen, ist es auch im Beispiel der Figur 5 zweckmäßig, eine Anordnung von Sperrdioden 17a, 17b, 17c als automatischen Schalter vorzusehen, um die Solarzellen 2 elektrisch abzutrennen, wenn die Batterie 4 eingesetzt wird.

Im Beispiel der Figur 6 enthalten die Betriebsschaltungseinrichtungen 17a, 17b, 17c als Stromquellen-Umschalter eine elektronische Klemmenspannungs-Anpassungsanordnung 23, einen elektronischen Betriebsart-Umschalter 24 und einen Dämmerungsschalter 10. Sowohl die durch die Solarzellen 2 und den Akku 3 gebildete Erststromquelle als auch die durch die Batterie 4 gebildete Zweitstromquelle sind über die Leitungen 15 und 21 ständig an den Stromquellenumschalter (Sperrdioden 17a, 17b, 17c) angeschlossen. Dieser Stromquellenumschalter hält die Erststromquelle solange im Betrieb angeschlossen, wie der Ladezustand des Akkus 3 für den Betrieb der Lampe 5 ausreichend ist. Sobald der Ladezustand (Klemmenspannung) des Akkus 3 nicht mehr für den Betrieb der Lampe ausreichend ist, gibt die Sperrdiode 17c des Stromquellenumschalters selbsttätig die Energieabgabe von der Zweitstromquelle, d.h. der Batterie 4 frei. Wenn der Akku 3 wieder ausreichenden Ladezustand aufweist, also höhere Klemmenspannung als die Batterie 4 annimmt, wird die Energieabgabe aus der Batterie 4 durch die Sperrdiode 17c wieder blockiert. Es erfolgt wieder die Umstellung auf Betrieb aus der Erststromquelle. Die Klemmenspannungs-Anpassungsanordnung 23 kann eine elektronische getaktete Schaltungsanordnung gemäß Figur 3 sein oder ein DC-DC-Wandler gemäß Figur 5 oder auch jegliche andere elektronische Schaltungsanordnung, welche die augenblicklich an der eingeschalteten Stromquelle herrschende Klemmenspannung abtastet und auf eine dem Betrieb der Lampe 5 optimale Betriebsspannung oder auf eine der optimalen Betriebsspannung äquivalenten elektrische Stromzuspeisung umsetzt. Der elektronische Betriebsartumschalter 24 ist derart ausgebildet, daß er bei für den Betrieb der Lampe 5 ausreichendem Ladezustand der jeweils eingeschalteten Batterie Dauerlicht-Betrieb der Lampe 5 hervorruft. Wird der Ladezustand der jeweils im Betrieb eingeschalteten Batterie schwach, dann schaltet der Betriebsartumschalter 24 auf Blinklicht-Betrieb, um die aus der einschalteten Stromquelle verfügbare elektrische Energie zu strecken. Dabei kann die Anordnung derart getroffen sein, daß bei schwachem Ladezustand des Akkus 3 in der Erststromquelle zunächst mittels des Stromquellenumschalters auf die Zweitstromquelle, d.h. auf die Batterie 4 umgeschaltet wird. Ist auch deren Ladezustand schwach, so wird die Umschaltung im Betriebsartumschalter 24 auf Blinklichtbetrieb wirksam. Bei solcher Anordnungsweise bedeutet das Auftreten von Blinklichtbetrieb, daß beide Stromquellen schwachen Ladezustand aufweisen und die Batterie 4 ausgetauscht werden sollte.

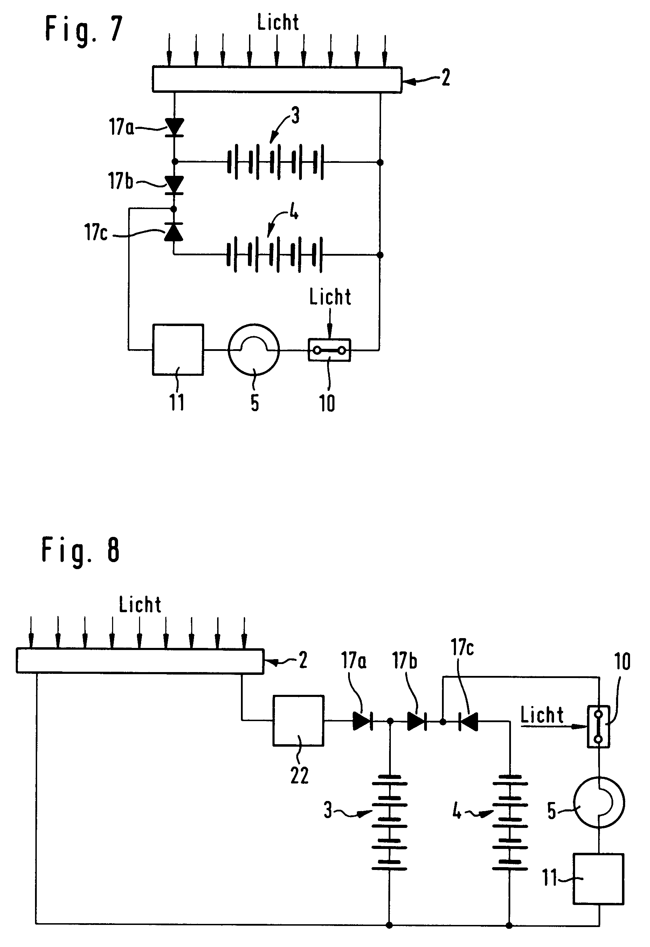

Bei der in Figur 7 dargestellten, vereinfachten Ausführung der solarbetriebenen Warnleuchte sind beide Stromquellen, nämlich die aus den Solarzellen 2 und dem Akku 3 gebildete Erststromquelle und die durch die Batterie 4 gebildete Zweitstromquelle ständig angeschlossen. Als Stromquellen-Umschalter sind die Sperrdioden 17a, 17b und 17c wie folgt vorgesehen:
Am Ausgang der Solarzellen 2 liegt die Sperrdiode 17a, die nur Strom durchläßt, wenn die an den Klemmen der Solarzellen anliegende Spannung bei oder oberhalb der Klemmenspannung des Akkus 3 liegt, und zwar nur von den Solarzellen 2 zum Akku 3. Jeglicher Stromfluß vom Akku 3 und auch von der Batterie 4 über die Solarzellen 2 ist abgeblockt. Zwischen der Erststromquelle, und zwar dem Akku 3, und der eigentlichen Schaltungsanordnung der Warnleuchte ist eine Sperrdiode in dem Sinne eingesetzt, daß sie nur Stromfluß von der Erststromquelle zur Schaltungsanordnung der Warnleuchte zuläßt, nicht aber Stromfluß von der als Zweitstromquelle ständig angeschlossenen Batterie 4 in die Erststromquelle. Schließlich ist an den Ausgang der Zweitstromquelle, d.h. der Batterie 4 eine Sperrdiode 17c eingesetzt, die Stromfluß nur von der Batterie 4 in die Schaltungsanordnung der Warnleuchte zuläßt und damit verhindert, daß bei starker Lichteinstrahlung auf die Solarzellen 2 Stromfluß von den Solarzellen 2 her in die Batterie 4 eintritt.

Der eigentliche Verbraucherstromkreis enthält im Beispiel der Figur 7 die Reihenschaltung einer zusätzlichen elektronischen Anordnung 11, die zur Anpassung der Klemmenspannung beider Stromquellen an die Lampe 5 dient und in jeglicher Weise beschaffen sein kann, wie es oben im Rahmen der übrigen Ausführungsbeispiele erläutert ist. Ferner enthält diese Reihenschaltung die Lampe 5 selbst und einen Dämmerungsschalter 10. Dieser Dammerungsschalter 10 dient in diesem Beispiel zugleich als Blockierung gegen direkten Stromfluß von den Solarzellen 12 durch die Anpassungs-Schaltungsanordnung 11 und die Lampe 5, da der Dämmerungsschalter 10 diesen eigentlichen Stromkreis der Warnleuchte bei Tag bzw. starkem Lichteinfall blockiert, während bei Dämmerung oder Nacht der Betriebsstromkreis für die Lampe 5 zwar geschlossen ist, aber die Solarzellen 2 dann keine Energie liefern.

Figur 8 zeigt eine Ergänzungsmöglichkeit dahingehend, daß der aus Solarzellen 2 und Akku 3 gebildete Erststromkreis zusätzlich mit einer Ladepumpen-Schaltungsanordnung 22 ausgestattet wird. Solche Ladepumpen sind an sich bekannte elektronische Schaltungsanordnungen und bieten den Vorteil, daß die von den Solarzellen 2 gelieferte elektrische Energie noch bei geringem Lichteinfall ausgenutzt werden kann, selbst dann, wenn die an den Klemmen der Solarzellen 2 erzeugte elektrische Spannung niedriger als die Klemmenspannung des Akkus 3 ist. Im Beispiel der Figur 8 wird im übrigen von der Schaltungsanordnung nach Figur 7 ausgegangen. Es ist aber möglich, eine Ladepumpen-Schaltungsanordnung 22 auch in entsprechender Weise bei allen übrigen oben erläuterten Ausführungsbeispielen einzusetzen.

## Patentansprüche

1. Warnleuchte zur optischen Absicherung von Gefahrenstellen, beispielsweise Baustellen an Straßen u. dgl., die einen Optikteil und einen Stromversorgungsteil aufweist, wobei der Optikteil in einem Leuchtengehäuse die Lichtquelle, vorzugsweise eine Glühlampe und eine elektronische Schalteinrichtung zum selbsttätigen Ein- und Ausschalten der Lichtquelle, z. B. einen Dämmerungsschalter, enthält und der Stromversorgungsteil eine Stromquelle aufweist, die aufgenommenes Licht in elektrische Energie umsetzende Solarzellen und eine Sekundärelemente-Batterie als elektrischen Energiespeicher enthält, dadurch gekennzeichnet, daß die Lampe (5) wahlweise anstelle oder zusätzlich zu der durch Solarzellen (2) und Sekundärelemente-Batterie (3) gebildeten Erststromquelle an eine von den Solarzellen (2) unabhängige Zweitstromquelle (4) anschließbar ist.

2. Warnleuchte nach Anspruch 1, dadurch gekennzeichnet, daß eine die Lampe (5) hinsichtlich ihrer optimalen Lichtausbeute an die jeweils zum Betrieb angeschlossene Stromquelle bzw. deren augenblickliche Klemmenspannung anpassende zusätzliche elektrische Anordnung (11, 17, 23) vorgesehen ist.

3. Warnleuchte nach Anspruch 1 oder 2, dadurch gekennzeichnet, daß die zusätzliche elektrische Anordnung einen die Klemmenspannung der jeweils angeschlossenen Stromquelle (2, 3; 4) auf eine Bezugsspannung angleichenden und auf die Betriebsspannung der Lampe (5) umsetzenden Wandler (17) aufweist.

4. Warnleuchte nach Anspruch 1 oder 2, dadurch gekennzeichnet, daß beide Stromquellen (2,3,4) unterschiedliche EMK und/oder unterschiedliche Klemmenspannung unter Belastung mit der Lampe (5) aufweisen, daß die Lampe (5) an diejenige Stromquelle (2,3,4) angepaßt ist, die die niedrigere Klemmenspannung liefert und daß die zusätzliche elektrische Anordnung (11,17,23) dazu ausgebildet ist, die höhere Klemmenspannung der anderen Stromquelle auf den als Bezugsspannung dienenden Klemmenspannungswert den der Lampe (5) angepassten Stromquelle (4) äquivalent anzupassen.

5. Warnleuchte nach Anspruch 4, dadurch gekennzeichnet, daß die Zweitstromquelle (4) die niedrigere Klemmenspannung liefert, diese niedrigere Klemmenspannung die Bezugsspannung für die Anpassung an die Betriebsspannung der Lampe (5) ist und die zusätzliche elektrische Anordnung (11,17,23) zum äquivalenten Anpassen an die Bezugsspannung mit der Erststromquelle (2,3) zusammengeschaltet ist.

6. Warnleuchte nach Anspruch 5, dadurch gekennzeichnet, daß die zusätzliche elektrische Anordnung (11) eine auf gegenüber der Klemmenspannung der Zweitstromquelle (4) erhöhte elektrische Spannung ansprechende elektronische, getaktete Stromunterbrecherschaltung ist.

7. Warnleuchte nach Anspruch 6, dadurch gekennzeichnet, daß die elektronische, getaktete Stromunterbrecherschaltung (11) für eine selbsttätige Steuerung der off-Zeit in Abhängigkeit der Spannungsdifferenz zwischen der auf die Klemmenspannung der Zweitstromquelle (4) eingestellten Bezugsspannung und der angelegten höheren Istspannung ausgebildet ist.

8. Warnleuchte nach Anspruch 6 oder 7, dadurch gekennzeichnet, daß die elektronische, getaktete Stromunterbrecherschaltung (11) für eine Taktfrequenz ausgelegt ist, die um ein Vielfaches höher als die mögliche Tastfrequenz bei Blinklichtbetrieb der Glühlampe (5) ist.

9. Warnleuchte nach einem der Ansprüche 1 bis 8, dadurch gekennzeichnet, daß die Erststromquelle und die Zweitstromquelle gleichzeitig vorgesehen und über einen Umschalter (22) und die die Anpassung der beiden Stromquellen vornehmende zusätzliche elektrische Anordnung (23) an die Lampe (5) angeschlossen sind.

10. Warnleuchte nach Anspruch 9, dadurch gekennzeichnet, daß der Umschalter als automatisch betätigter elektronischer Umschalter derart ausgebildet ist, daß er auf die Zweitstromquelle (4) schaltet, sobald die Klemmenspannung an der Erststromquelle (2,3) unter diejenige der Zweitstromquelle (4) oder eine entsprechend der Klemmenspannung der Zweitstromquelle eingestellte Bezugsspannung absinkt, und daß er auf die Erststromquelle (2,3) schaltet, wenn deren Klemmenspannung über oder um ein vorher festgelegtes Maß über der Klemmenspannung der Zweitstromquelle (4) bzw. über der Bezugsspannung liegt.

11. Warnleuchte nach Anspruch 10, dadurch gekennzeichnet, daß der elektronische Umschalter durch Dioden (17a, 17b, 17c) gebildet ist, die zwischen der Erststromquelle (2, 3), der Zweitstromquelle (4) und dem die Lampe (5) enthaltenden Verbraucherstromkreis eingesetzt sind.

12. Warnleuchte nach einem der Ansprüche 1 bis 11, dadurch gekennzeichnet, daß eine an einen Kontrollschalter angeschlossene Kontrollampe vorgesehen ist, wobei der Kontrollschalter anspricht, wenn die Klemmenspannung an der Sekundärelemente-Batterie der Erststromquelle oder/und an der Zweitstromquelle unter einen vorher festgelegten Spannungswert absinkt, und dabei die Kontrollampe einschaltet.

13. Warnleuchte nach einem der Ansprüche 1 bis 12, dadurch gekennzeichnet, daß die Betriebseinrichtungen für die Lampe (5) für Dauerlicht und für Blinklicht ausgebildet sind und daß ein auf die Klemmenspannung der Sekundärelemente-Batterie oder der Zweitstromquelle ansprechender, automatischer Betriebsumschalter (24) vorgesehen ist, wobei der Betriebsumschalter (24) im Normalbetrieb auf Dauerlicht eingestellt ist und bei Absinken der Klemmenspannung der jeweils übernachteten Stromquelle auf Blinklicht umschaltet.

14. Warnleuchte nach Anspruch 10 und 13, dadurch gekennzeichnet, daß der Betriebsumschalter (24) zur gleichzeitigen Überwachung sowohl der Sekundärelemente-Batterie (3) als auch der Primärelemente-Batterie (4) derart geschaltet ist, daß er bei Absinken der Klemmenspannung an einer der Batterien auf Blinklicht-Betrieb umschaltet.

15. Warnleuchte nach Anspruch 10 und 13, dadurch gekennzeichnet, daß der Betriebsschalter (24) derart mit dem Stromquellenumschalter (22) verbunden ist, daß die Klemmenspannung der jeweils eingeschalteten Stromquelle vom Betriebsumschalter (24) überwacht wird.

16. Warnleuchte nach einem der Ansprüche 1 bis 15, dadurch gekennzeichnet, daß in der Erststromquelle zwischen den Solarzellen (2) und der Sekundärelemente-Batterie (3) eine ansich bekannte Ladepumpen-Schaltungsanordnung (22) eingesetzt ist.

17. Warnleuchte nach einem der Ansprüche 1 bis 16, dadurch gekennzeichnet, daß die Zweitstromquelle (4) bzw. die als Zweitstromquelle einsetzbare Primärelemente-Batterie (4) gleiche Anordnung und Ausbildung der Anschluß-Steckelemente wie die Sekundärelemente-Batterie (3) der Erststromquelle aufweist.
